# EUROPEAN PATENT SPECIFICATION

(11) **EP 2 353 967 B1**
(45) Date of publication and mention of the grant of the patent: **29.08.2012**
(21) Application number: 10382027.0
(22) Date of filing: 10.02.2010
(51) Int. Cl.: B62D 3/12, F16H 55/28, B29C 45/00

(54) **Rack guide for a steering column of an automobile and method for manufacturing the same by injection moulding**
Zahnstangendruckstück für eine Lenksäule eines Automobils und Verfahren zur Herstellung derselben durch Spritzgießen
Guide de crémaillère pour colonne de direction d'une automobile et son procédé de fabrication par moulage par injection

(43) Date of publication of application: 10.08.2011
(73) Proprietor: Cie Automotive, S.A., 48011 Bilbao (ES)
(72) Inventor: Azenha, Joäo, 48011 Bilbao (Vizcaya) (ES); Alexandre, Sonia, 48011 Bilbao (Vizcaya) (ES)
(74) Representative: Carpintero Lopez, Francisco

(56) References cited:
- WO-A1-2005/077637
- WO-A2-02/088572

## Description

### TECHNICAL FIELD OF THE INVENTION

The present invention is comprised within the technical field of components of an automobile's steering mechanism, particularly rack guides, and the manufacture thereof in automotive industry.

### BACKGROUND OF THE INVENTION

A rack guide is a part that of a steering mechanism comprising a rack-and-pinion mechanism of an automobile and it is used to urge the rack shaft against the pinion. Nowadays there are two different types of the same product, a metallic solution and a plastic solution. The metallic and the plastic solution both are comprised of different parts i.e. a thread setting, a pusher, a spring or a shock absorber, a washer and an o-ring. The difference between these two solutions is in the materials used. In the metallic solution the thread setting, the pusher and/or the spring are metallic whilst in the plastic solution all parts are in plastic material. Due to the position and assembly of these different components of conventional rack guides, in both solutions, the process of manufacturing these parts disadvantageously implies a high labour input.

WO 02/088572-A discloses a rack guide for a rack and pinion steering gear which comprises a pusher, a setting member, biasing member which may be a metal spring or an elastomeric spring, compressed between the pusher and the setting member, and a ring-shaped sealing element, all of which are separate components.

WO 2005/077637 discloses a transfer moulding device for injection moulding and assembling plastic parts in several steps plastic parts of an unspecified nature.

### DESCRIPTION OF THE INVENTION

The present invention is intended to overcome the above mentioned drawbacks of prior art by providing a new rack guide for a steering mechanism of an automobile and a method for manufacturing the same by injection moulding.

The rack guide according to the invention comprises a cylindrical pusher connected to a thread setting by means of a compressible element as a shock absorber, and a ring-shaped sealing element radially protruding from an outer perimeter of the pusher element, wherein
the pusher comprises a hollow first cylindrical portion, a hollow second cylindrical portion and an annular recessed portion between said cylindrical portions, an inner cavity, a cover portion comprising a transversal arched depression shaped such that its surface is complementary to the shape of a circumferential portion of a rack shaft, and an open base surrounded by a free rim of the first cylindrical hollow portion;
the first cylindrical portion and the annular recessed portion comprise axial slits extending from the free rim to the second cylindrical portion;
a tube-shaped projection extends from a centre portion of the arched depression into the inner cavity;
the shock absorber comprises a cylindrical body comprising a free end portion and a thereto axially-opposed flanged end portion with a peripheral skirt extending therefrom towards the free end portion such that there is an annular space between the skirt and the outer surface of the cylindrical body, a ring surrounding the peripheral skirt at a distance from the peripheral skirt and a rounded outer surface, and a first axial hollow portion extending from the centre of the flanged portion into the cylindrical body;
the cylindrical body, the peripheral skirt and the ring are connected to each other by radial ribs located in positions being complementary to the axial slits in the first cylindrical portion and the annular recessed portion of the pusher;
the ring is connected to portions of the radial ribs being nearest to said flanged end portion;
the first axial hollow is positioned and dimensioned to retain the tube-shaped projection of the pusher;
the pusher is overmoulded with the shock absorber by injection such that the pusher and the shock absorber are comprised in a subassembly in which the flanged end portion and the peripheral skirt of the shock absorber fit within the inner cavity of the pusher; the flanged end portion of the shock absorber contacts the cover portion of the pusher and the radial step of the shock absorber abuts against the annular stepped portion in the inner cavity of the pusher, and the ring and the radial ribs of the shock absorber are located respectively within the annular recessed portion and the axial slits of the pusher, and the rounded outer surface of the ring protrudes from the radial surface of the pusher and whilst the end portions of the radial ribs radially flush with said radial surface of the skirt;
the thread setting comprises a closed base having a flat surface and an open base, a threaded outer surface, and a fastening element emerging from the closed base and which may be comprised of a plurality of axially protruding resiliently flexible wings having hook-shaped heads portions, dimensioned and positioned to fit by pressure within a second axial hollow portion in the cylindrical body of the shock absorber such that said closed base of the thread setting abuts against the open base of the shock absorber.

In accordance with the invention, the tube-shaped projection may have an axial inner passage and, within the first axial hollow portion, there may be an axial protrusion that extends from the bottom of the first axial hollow portion towards the flanged portion such that there is an axial annular chamber around the axial protrusion. By this arrangement the tube-shaped projection of the pusher fits within said annular chamber and said axial protrusion fits within the axial inner passage of the projection.

The inner cavity in the pusher may have a slightly frustoconical shape and comprise an inner annular stepped portion, and in that the skirt has a complementarily shaped radial surface comprising a radial step that is dimensioned and positioned complementarily to the annular stepped portion in the inner cavity of the pusher, such that the skirt has an outer diameter that increases towards the setting thread.

The rack guide may further comprise stubs that axially emerge from diametrically opposed sections of the flange end portion of the shock absorber. The stubs fit in peripheral notches provided in opposed side portions of the inner surface of the cover portion of the pusher.

The shock absorber having the structure as described herein above on the one hand must have the functional properties to replace the functions of the washer, of the o-ring seal and of the spring or the shock absorber of a conventional rack guide, i.e., it must be stiff enough to efficiently urge the pusher against the rack shaft against the pinion and resilient enough to ensure sealing. Further, it must be capable of retaining the fastening element in its second hollow portion. On the other hand, the shock absorber must be made of a material that may be overmoulded by injection moulding over the pusher. Suitable materials ensuring these mechanical properties are, for example, silicones or thermoplastic polyurethanes (TPU) which are a class of plastics known to have many useful properties, including elasticity, transparency, and resistance to oil, grease and abrasion, and which technically are thermoplastic elastomers consisting of linear segmented block copolymers composed of hard and soft segments, and thermoplastic vulcanized (TPV) which are thermoplastic elastomers, sometimes referred to as thermoplastic rubbers, a class of copolymers or a physical mix of polymers (usually a plastic and a rubber) which comprise materials with both thermoplastic and elastomeric properties. When TPU is used to inject the shock absorber, the injection area and the areas surrounding the injection area should conveniently be thermoinsulated.

As stated hereinabove, this invention also refers to a method for making rack guides having the structure of the rack guide as defined herein above, the method comprising injection-moulding the pusher in a mould comprising an ejection side and an injection side, the shock absorber and the thread setting and assembling the pusher, the shock absorber and the thread setting, in accordance with
a first step in which the mould is closed such that a first ejection side moulding cavity closes against a first injection side moulding cavity, a second ejection side moulding cavity closes against a second injection side moulding cavity, and a third ejection side moulding cavity closes against a third injection side moulding cavity,
a second step in which, in the closed mould, simultaneously a pusher held in a first ejection side moulding cavity is overmoulded in said first moulding cavities such that a subassembly comprising the pusher and a shock absorber is formed, a further pusher is moulded in said second cavities, and a thread setting is moulded in the third moulding cavities;
a third step in which the mould is opened such that the subassembly, the further pusher and the thread setting remain held respectively in said first, second and third ejection side moulding cavities;
a fourth step in which the thread setting is extracted from the third ejection side moulding cavity and then assembled to the shock absorber of said subassembly so that a finished rack guide is produced;
a fifth step in which the finished rack guide is extracted from the open mould;
a sixth step in which a rotary insert carrying the further pusher is pushed towards the injection side and rotated such that the further pusher faces the first injection side moulding cavity;
a seventh step in which the rotary insert is retracted into the ejection side;
an eighth step in which the mould is again closed and simultaneously the further pusher is overmoulded in the first cavities such that a further subassembly comprising a pusher and shock absorber is formed, a still further pusher is moulded in the second moulding cavities, and a further thread setting is moulded in the third moulding cavities;
carrying out sequences of steps being analogous to the third, fourth, fifth, sixth, seventh and eight steps as many times as required to make a desired amount of rack guides.
As apparent from the above, the present invention overcomes the drawbacks of prior art rack guides and of the conventional methods used to make such prior art rack guides.

### BRIEF DESCRIPTION OF THE DRAWINGS

Hereinafter, aspects and embodiments of the invention will be described on the grounds of drawings wherein
figure 1 is an isometric view of a rack guide in accordance with an embodiment of the present invention
figures 2A and 2B are exploded views of the rack guide shown in figure 1;
figure 3 is a section view of the rack guide along the line A-A shown in figure 1;
figure 4 is a section view of the rack guide along the line B-B shown in figure 1;
figure 5 is an elevation view of the ejection side mould part of an embodiment of a mould useful for manufacturing rack guides according to the present invention;
figure 6 is an elevation view of the injection side mould part of an embodiment of a mould useful for manufacturing rack guides according to the present invention;
figures 7A - 7H are schematic views depicting the various stages of an embodiment of the method according to the present invention;
figure 8 is an isometric view of an injection mould comprising the ejection side and the injection side respectively shown in figures 5 and 6, in an open position in an initial stage of the method according to the present invention;
figure 9 is an isometric view of the mould shown in figure 8 in open position in a subsequent stage of the method according to the present invention;
figure 10 is an isometric view of the mould shown in figure 8 in open position in an another subsequent stage of the method according to the present invention;
figure 11 an isometric view of the mould in open position and ready to be closed in still another subsequent stage of the method according to the present invention
figure 12 is an elevation view of the ejection side mould part shown in figure 5, in a position corresponding to a second stage of the method of the present invention;
figure 13 is an elevation view of the ejection side mould part shown in figure 5, in a position corresponding to a fourth stage of the method of the present invention;
figure 14 is an elevation view of the ejection side mould part shown in figure 5, in a position corresponding to a fifth stage of the method of the present invention;
figure 15 is an elevation view of the ejection side mould part shown in figure 5, in a position corresponding to a sixth stage of the method of the present invention.
figure 16 is an elevation view of the ejection side mould part shown in figure 5, in a position corresponding to a seventh stage preparing for the begging of the eighth stage of the method of the present invention.

In these figures, there are references identifying the following elements
- 1, 1': pusher
- 1 a: hollow first cylindrical portion
- 1 b: hollow second cylindrical
- 1 c: annular recessed portion
- 1 d: axial slits
- 1 e: inner cavity
- 1f: annular stepped portion
- 1 g: free rim
- 1 h: cover portion
- 1 i: arched depression
- 1j: tube shaped projection
- 1 k: axial inner passage
- 1l: peripheral notches
- 2: shock absorber
- 2a: cylindrical body
- 2b: free end portion
- 2c: flanged end portion
- 2d: peripheral skirt
- 2e: annular space
- 2f, 2f': radial ribs
- 2g: ring
- 2h: first axial hollow portion
- 2i: axial protrusion
- 2j: second axial hollow portion
- 2k: stubs
- 2l: radial step
- 3: thread setting
- 3a: closed base
- 3b: open base
- 3c: threaded outer surface
- 3d: inner polyhedral cavity
- 3e: side wall
- 3f: axial prismatic inner
- 3g: stiffening partitions
- 3h: fastening element
- 3h': axially protruding wings
- 4: pusher/shock absorber subassembly
- 5: first mould part (ejection side)
- 5A: first ejection side mould cavity
- 5B: second ejection side mould cavity
- 5C: third ejection side mould cavity
- 5a: rotary insert (ejection side)
- 5b, 5b': lateral opening mechanism
- 5c, 5c': lateral actuators
- 5A': lateral mould plates (first ejection side mould cavity)
- 5B': lateral mould plates (second ejection side mould cavity)
- 5C': lateral mould plates (third ejection side mould cavity)
- 6: second mould part (injection side)
- 6A: first injection side mould cavity
- 6B: second injection side mould cavity
- 6C: third injection side mould cavity

### EMBODIMENTS OF THE INVENTION

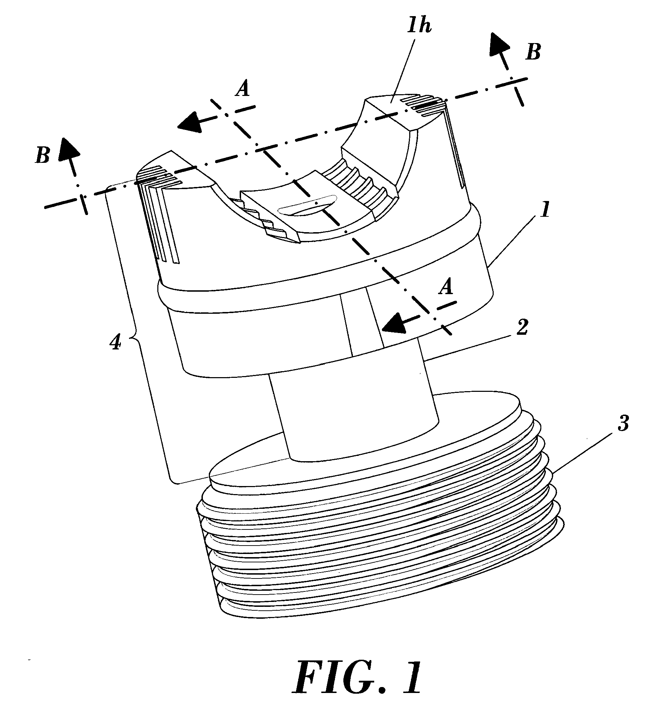

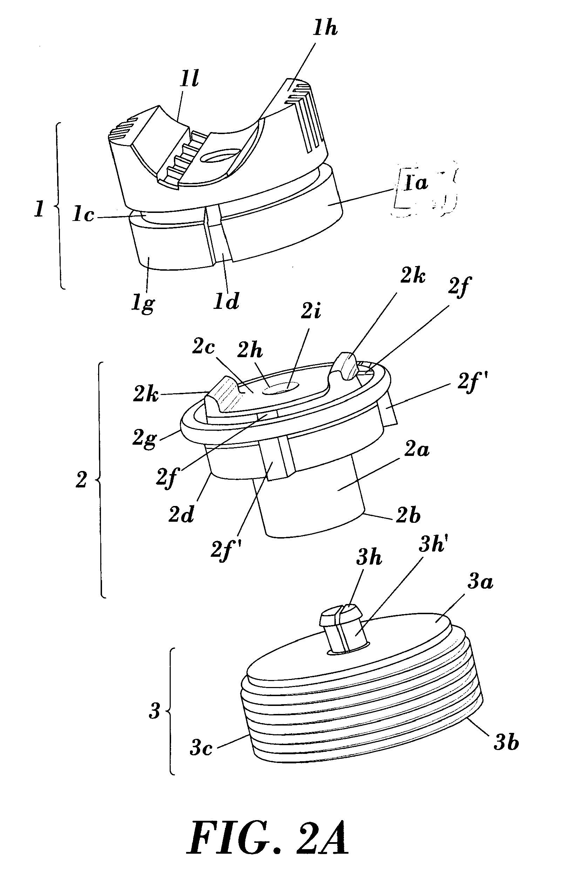

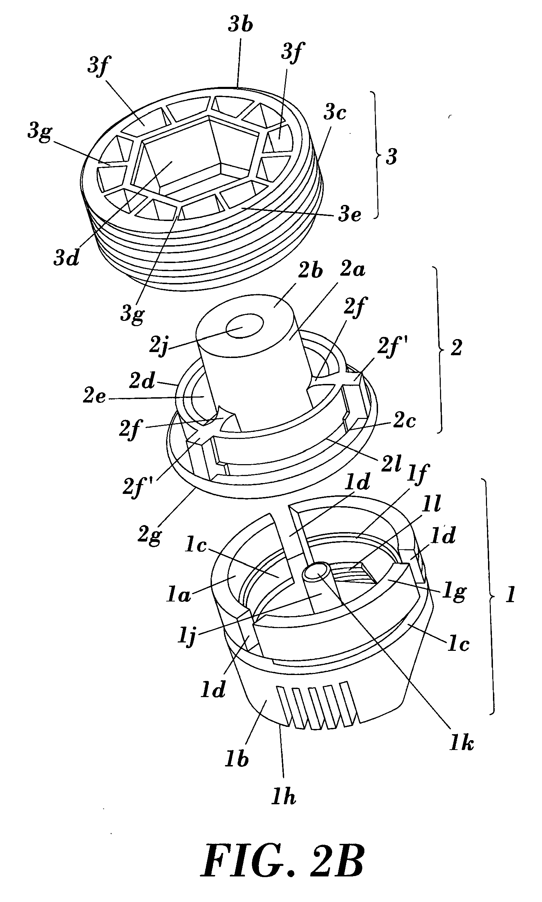

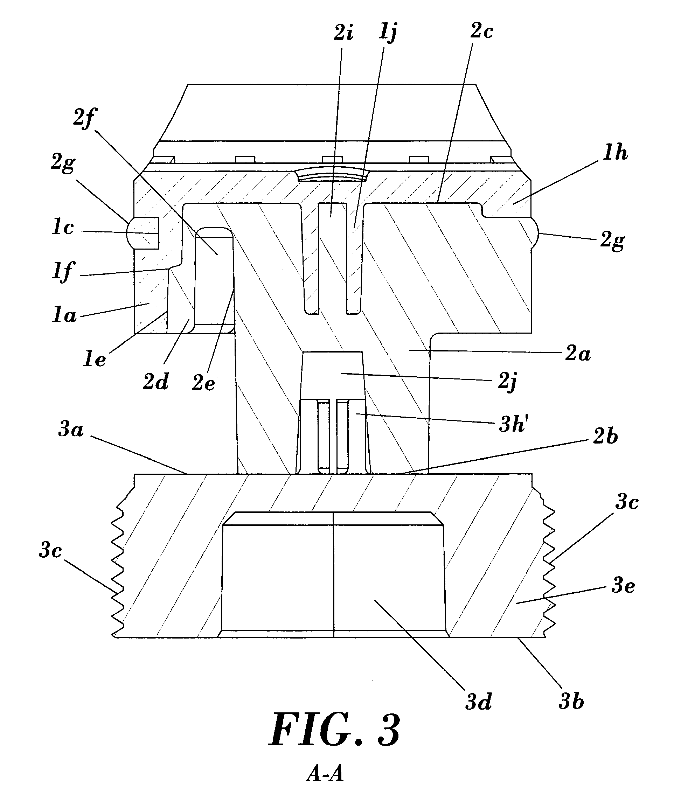

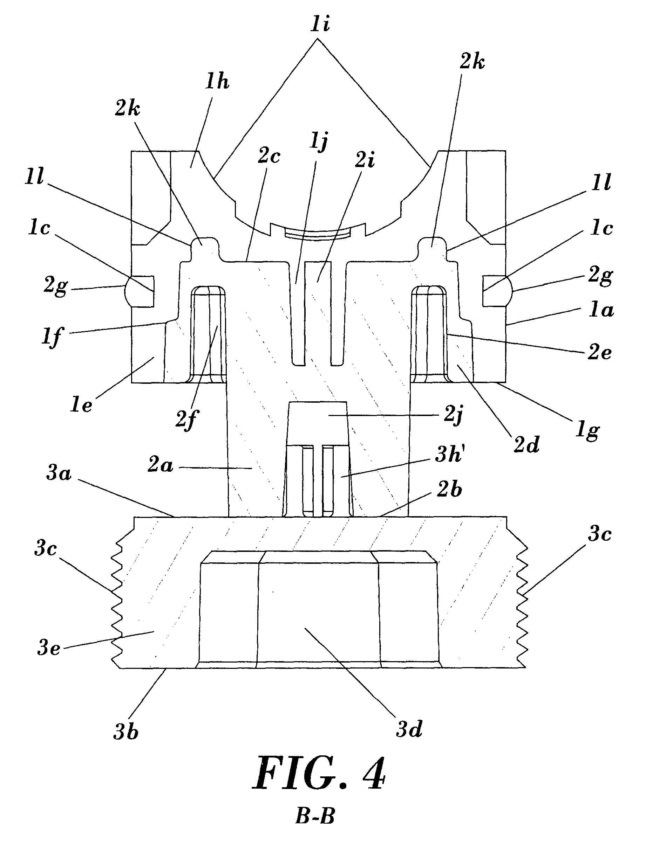

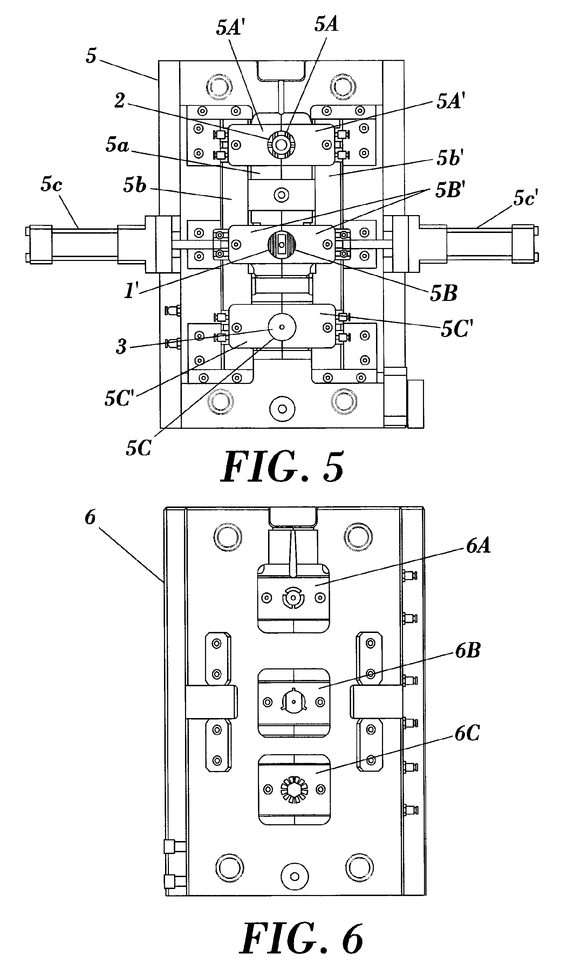

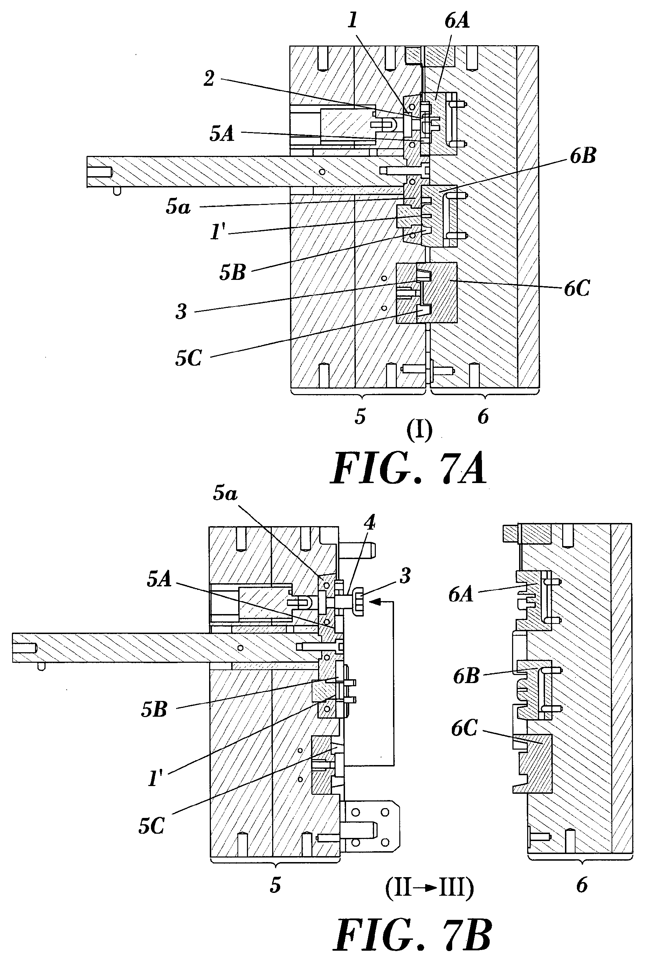

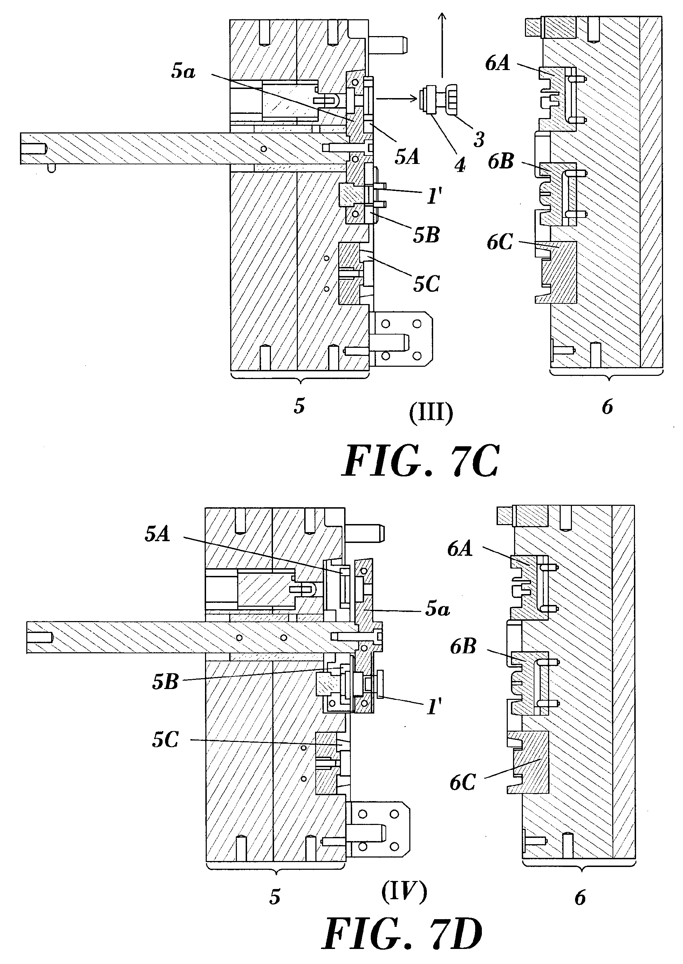

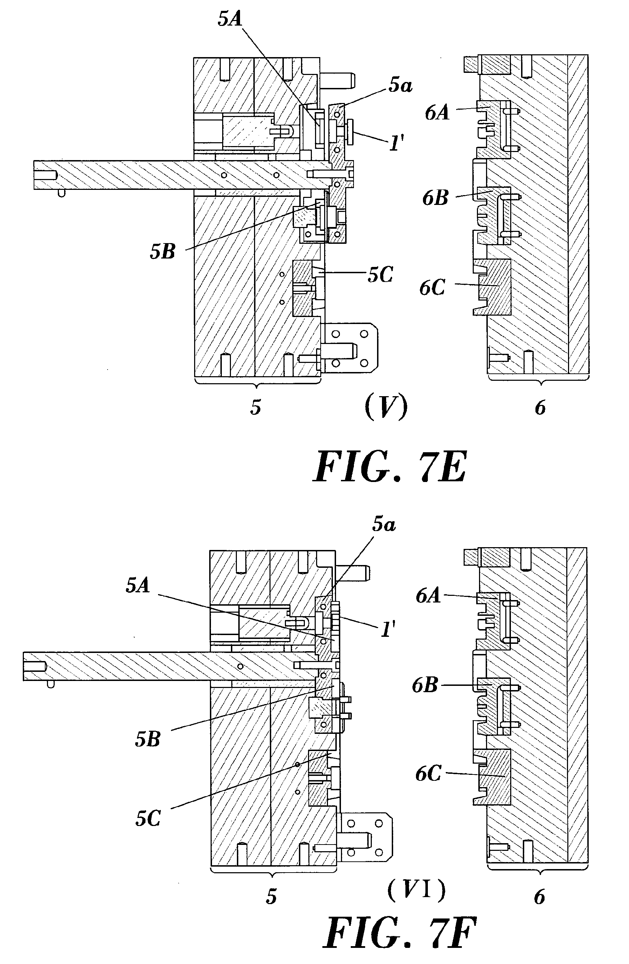

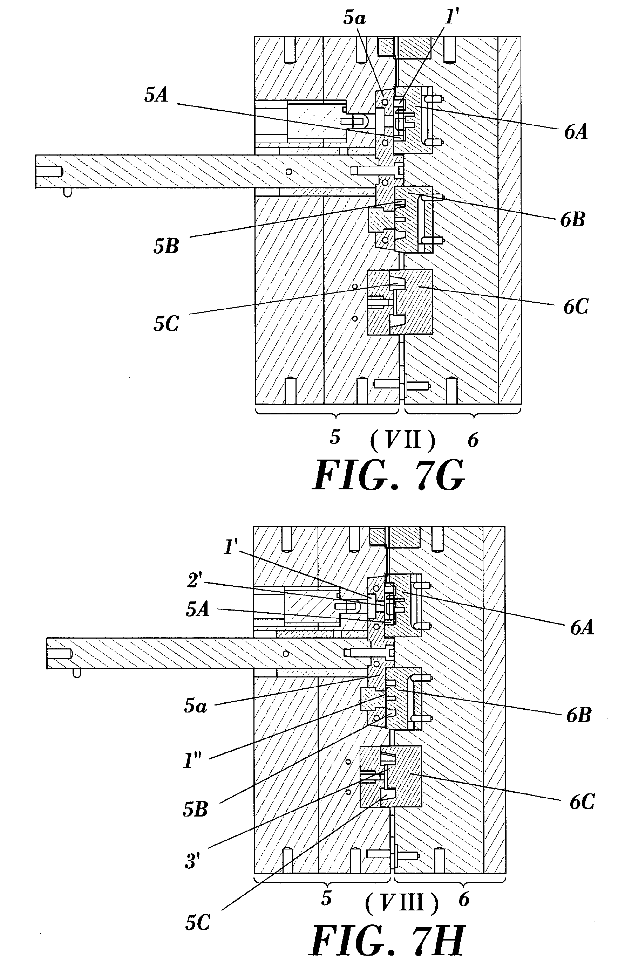

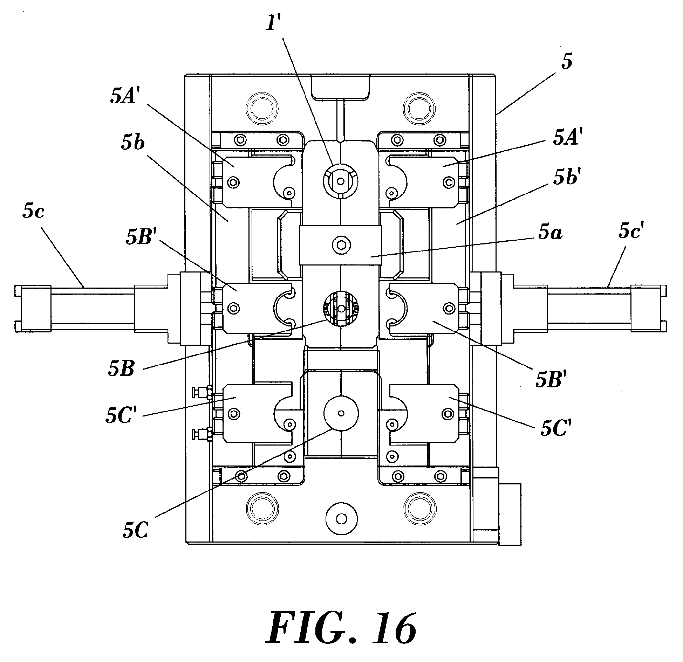

The rack guide shown in figure 1-4 comprises a pusher -1-, a shock absorber - 2- and a thread setting -3-. The pusher -1- and the shock absorber -2- are comprised in a subassembly -4- as will be explained further on in this specification. This rack guide can be made in a mould, the features of which are shown in figures 5-16 in accordance with a method comprising the stages shown in figures 7-16 by which the rack guide is made in one single tool/phase with the sequential injection of the different parts in one single injection machine by means of multi-material injection.

Externally, the pusher -1- comprises a hollow first cylindrical portion -1 a- and a hollow second cylindrical portion -1b- between which there is an annular recessed portion -1c- whilst internally, the pusher -1- comprises a slightly frustoconical inner cavity -1e- comprising an inner annular stepped portion -1f-. The inner cavity -1e-has an open base surrounded by a free rim -1g- of the first cylindrical portion -1a-and is closed by a thereto axially-opposed cover portion -1 h- of the second hollow cylindrical portion -1b-. In opposed side portions of the inner surface of the cover portion -1h- there are peripheral notches -1l-. The first cylindrical portion -1a- and the annular recessed portion -1 c- comprise axial slits -1d- extending from the free rim of the first cylindrical portion -1a- to the second cylindrical portion -1b-. The cover portion -1h- of the second cylindrical portion -1b- comprises an arched depression -1i- that extends from one side to the other side of thereof and that is shaped such that its surface is complementary to the shape of a portion of the rack shaft (not shown in the drawings). A tube-shaped projection -1j- extends from a centre portion of the cover portion -1h- downwards into the inner cavity -1e-. The tube-shaped projection -1i- has an axial inner passage -1 k-.

The shock absorber -2- comprises a cylindrical body -2a- comprising a free end portion -2b- and a thereto axially-opposed flanged end portion -2c- with a peripheral skirt -2d- extending therefrom towards the free end portion -2b- such that there is an annular space -2e- between the skirt -2d- and the outer surface of the cylindrical body -2a-. The radial surface of the skirt -2d- is shaped complementarily and comprises a radial step -2l- such that the portion of the skirt -2k- being nearest to the flanged end portion -2c- has a smaller outer diameter than the outer diameter of the portion of the skirt being remote from the flanged end portion -2c-. The radial step -2l- is dimensioned and positioned complementarily to the annular stepped portion -1f- in the inner cavity -1e- of the pusher -1-. A ring -2g- surrounds the peripheral skirt -2d-, the ring -2g- having an inner surface that is distanced from the outer surface of the peripheral skirt -2d- and a rounded outer surface. The cylindrical body -2a-, the peripheral skirt -2d- and the ring are connected to each other by radial ribs -2f- and -2f'- located in positions being complementary to the axial slits - 1 d- in the first cylindrical portion -1a- and the annular recessed portion -1 c- of the pusher -1-. The ring -2g- is connected to portions -2f'- of the radial ribs -2f- being nearest to the flanged end portion -2c- of the cylindrical boy -2a-. A first axial hollow portion -2h- extends from the centre of the flanged portion -2c- into the cylindrical body -2a-. Within the first axial hollow portion -2h- there is an axial protrusion -2i-that extends from the bottom of the first axial hollow portion -2h- towards the flanged portion -2c- such that there is an axial annular chamber between the inner wall of first axial hollow portion -2h- and the outside of the axial protrusion -2i-. The cylindrical body -2a- further comprises a frustoconical second axial hollow portion - 2j- that axially extends from the centre of the free end portion -2b- into the cylindrical body -2a-. Two stubs -2k- having arched cross sections emerge axially respectively from diametrically peripheral sections of the flanged end portion -2c- of the shock absorber -2-. The stubs -2k- are shaped and positioned to fit within the peripheral notches -1l- in the inner surface of the cover portion -1 h- of the second hollow cylindrical portion -1b- of the pusher -1-.

The thread setting -3- comprises a closed base -3a- having a flat surface and an open base -3b-, a threaded outer surface -3c- and an inner polyhedral cavity -3d-having a regular hexagonal cross section. The side wall -3e- of the thread setting -3-comprises axial prismatic inner openings -3f- separated by stiffening partitions -3g-. From a central portion of the outer surface of the upper closed base -3a- there emerges a fastening element -3h- dimensioned and positioned to fit by pressure within the second axial hollow portion -2j- in the cylindrical body -2a- of the shock absorber -2-. The fastening element -3h- comprises a plurality of axially protruding resiliently flexible wings -3h'- having hook-shaped heads portions.

In the embodiment shown in figures 1-4, the shock absorber -2- has been overmoulded by injection over the pusher -1- such that the flanged end portion -2c-of the shock absorber -2- and the peripheral skirt -1d- fit within the inner cavity -1 e-of the pusher -1-. The stubs -2k- fit within the notches -1l- such that the flanged end portion -2c- of the shock absorber -2- contacts the cover portion -1 h- of the pusher - 1- and the radial step -2l- of the shock absorber -2- abuts against the annular stepped portion -1f- in the inner cavity -1e- of the pusher -1-. The ring -2g- and the radial ribs -2f- of the shock absorber -2- are located respectively within the annular recessed portion -1 c- and the axial slits -1d- of the pusher -1-. Thus, the rounded outer surface of the ring -2g- protrudes from the radial surface of the pusher -1- and thus operates as an o-ring seal, whilst the radial surfaces of the end portions -2f'- of the radial ribs -2f- flush with said radial surface. The tube shaped projection -1j- of the pusher -1- is positioned within the annular chamber formed between the first hollow portion -2h- and the therein located axial protrusion -2i- of the shock absorber -2- such that said axial protrusion -2i- fits within the axial inner passage -1k- of the projection -1j- and the wall of said projection -1j- fits within said annular chamber in the shock absorber -2-. The pusher -1- and the shock absorber -2- form a subassembly -4-.

In turn, in the finished rack guide, the setting thread -3- is assembled to shock absorber -2- by inserting the fastening element -3h- into the second axial hollow portion -2j- in the cylindrical body -2a- of the shock absorber -2- such that the setting thread's closed base -3a- abuts against the shock absorber's open base -2b-

The shock absorber -2- is made from a flexibly resilient injectable material selected from silicones, thermoplastic polyurethanes, thermoplastic vulcanized and combinations thereof.

As stated herein above, the rack guide may be made by a moulding method using one moulding machine only. An embodiment of the method will be described subsequently with reference to figures 5-16.

Figure 5 shows an ejection side mould part -5- comprising a first moulding cavity -5A- containing a already moulded first pusher (not shown in figure 5) overmoulded with a shock absorber -2- by injection, a second moulding cavity -5B-containing an already moulded second pusher -1'-, a third moulding cavity -5C-containing an already moulded thread setting -3- and a rotary insert -5a-. The first, second and third cavities -5A-, 5B, 5C-, are respectively defined in lateral mould plates -5A'-, -5B'- and -5C'- that can be opened by means of lateral opening mechanisms -5b-, 5b'- operated by lateral actuators -5c, 5c'-.

Figure 6 shows an injection side mould part -6- comprising a first moulding cavity -6A- for overmoulding pushers -1, 1'- by injection together with the ejection side's first moulding cavity -5A- with shock absorbers -2- (cf. figures 7A-7H), a second moulding cavity -6B- for moulding pushers -1, 1'- (cf. figures 7A-7H) together with the ejection side's second moulding cavity -5B-, and a third moulding cavity - 6C- for moulding thread settings -3- together with the ejection side's third moulding cavity -5C-. The use of mould parts -5, 6- will be now explained with reference to figures 7-16.

Figure 7A-7H show an embodiment of a working cycle of the method according to the present invention comprising stages (I)-(VIII). This working cycle is repeated to manufacture successive rack guides.

In stage (I) shown in figure 7A, the mould is in a closed position where the moulding cavities -5A, 5B, 5C- of the ejection side mould part -5- respectively face the moulding cavities -6A, 6B, 6C- of the injection side mould part -6-. In the mould portion comprised of the first moulding cavities -5A, 6A- a first pusher -1- is overmoulded with a first shock absorber -2- such that a subassembly -4- as described herein above with reference to figures 1-4 is formed. Simultaneously, a second pusher -1'- is moulded in the mould portion comprised of the second moulding cavities -5B, 6B- and a first thread setting -3- is moulded in the mould portion comprised of the third moulding cavities -5C, 6C-.

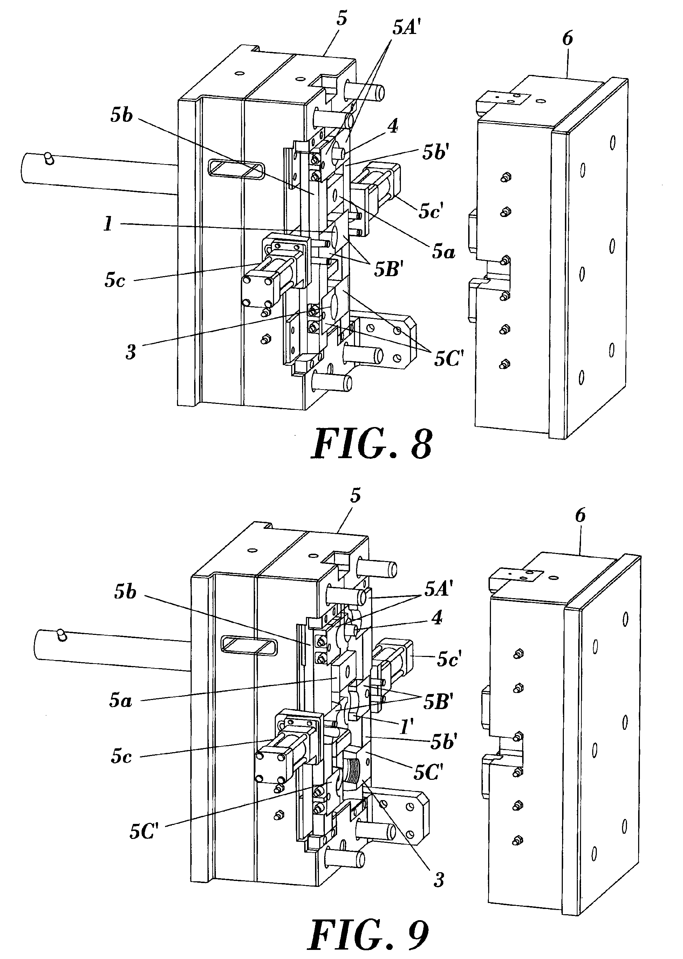

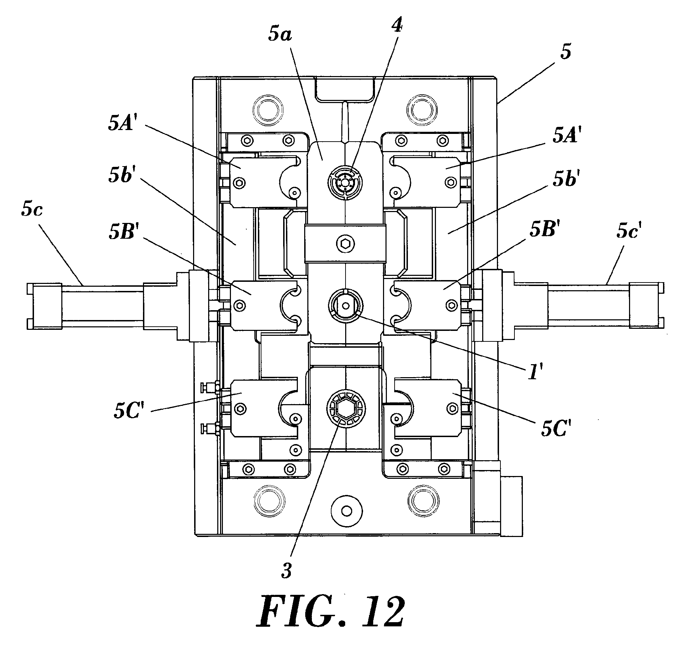

In stage (II) (cf. figures 7B, 8, 9, 12) the mould is opened adopting the position shown in figures 8 and 12. The lateral opening mechanism -5b, 5b'-operated by lateral actuators -5c, 5c'- opens the lateral mould plates -5A'-, -5B'- and -5C'- that become positioned as shown in figure 9. The subassembly -4-, and the second pusher -1'- remain positioned on the front portion of the rotary insert -5a-whilst the first thread setting -3- remains attached to the ejection side mould part - 5-.

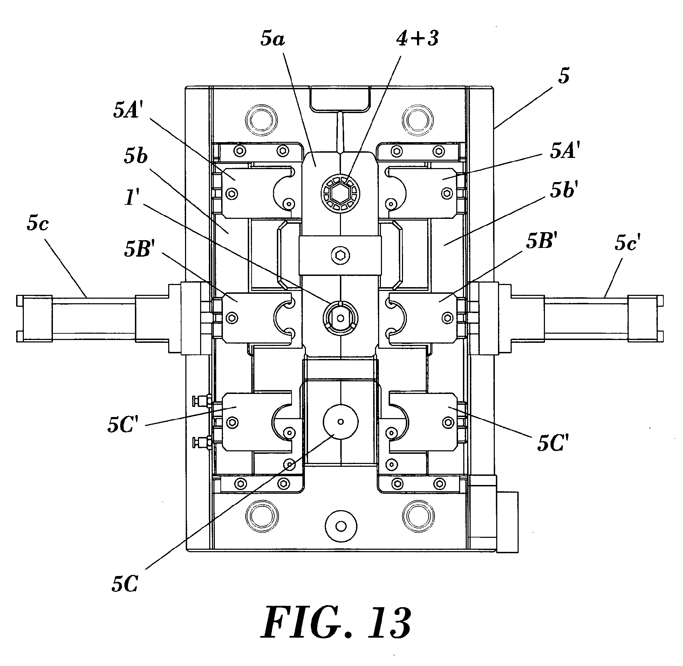

In stage (III) (cf. figures 7B, 7C and 13) the first thread setting -3- is extracted (cf. figure 7B) from the third ejection side moulding cavity -5C- and assembled to the cylindrical body -2a- of the shock absorber -4- (cf. figures (7B, 7C and 13).

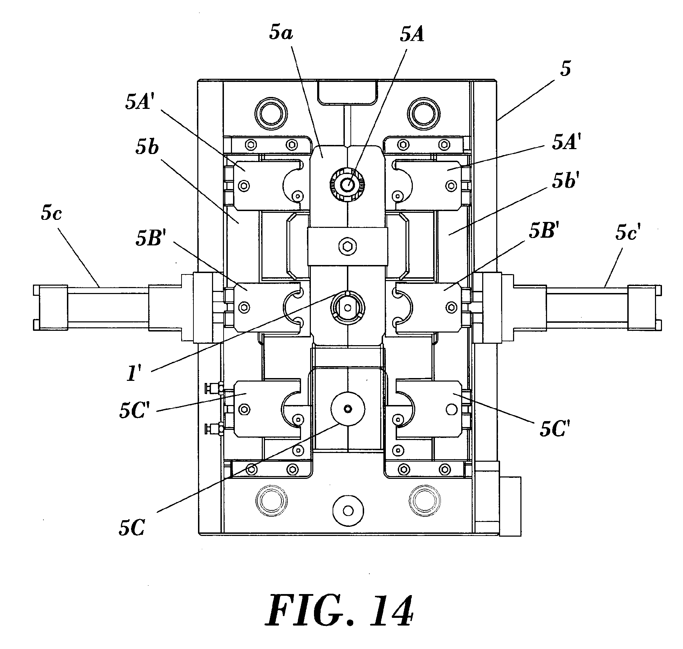

In stage (IV) (cf. figures 7D, 14) the finished rack guide comprised of the subassembly -4- and the thread setting -3- is extracted from the mould whilst the second pusher -1'- remains on the front surface of the rotary insert -5a- facing the second ejection side mould cavity -5B-.

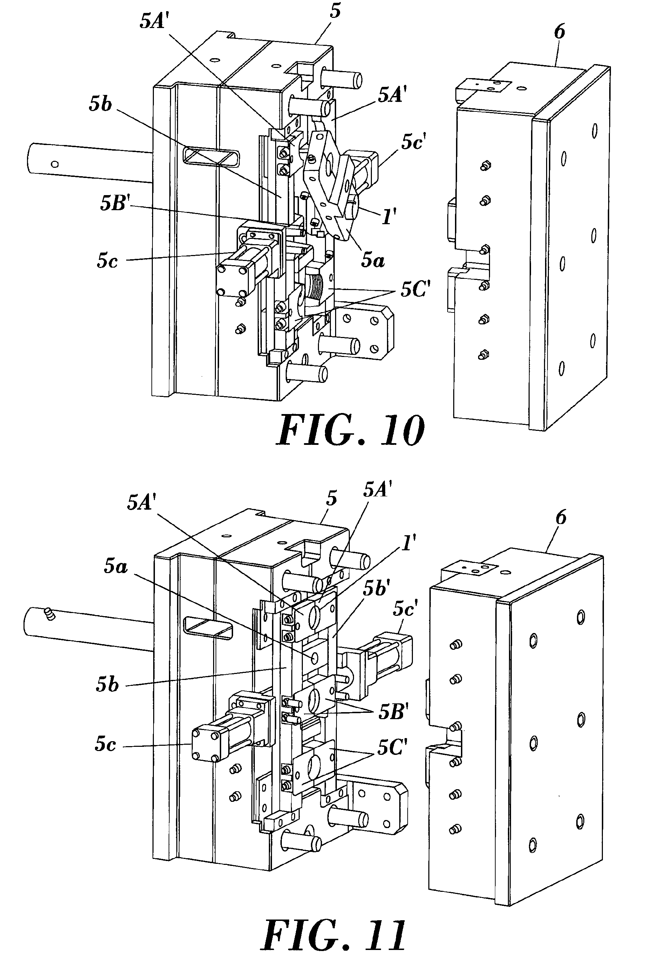

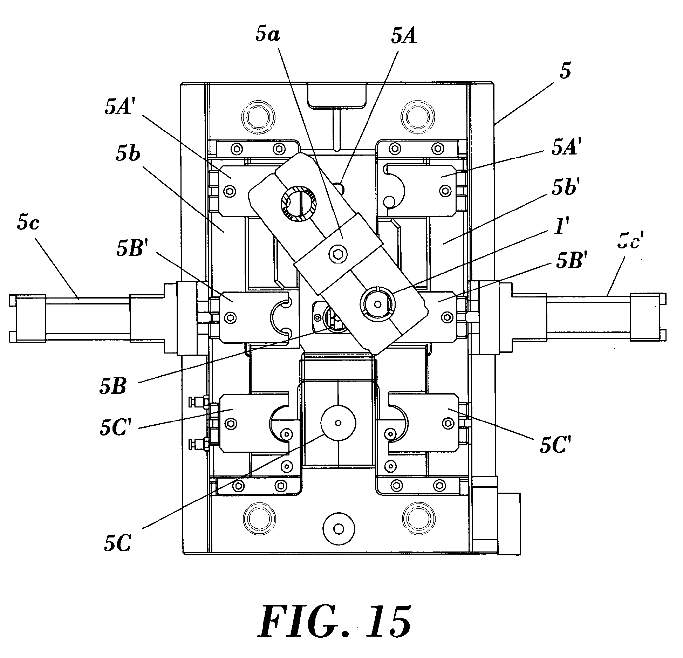

In stage (V) (cf. figures 7E, 7F, 10, 11, 15) the lateral opening mechanism - 5b, 5b'- has opened sufficiently to leave space for the rotary insert -5a- carrying the second pusher -1'- to be pushed out of the ejection side mould part -5- towards the injection mould part -6- (cf. figure 7D). Thereafter, the rotary insert -5a- rotates (cf. figures 10, 15) by 180 degrees until reaching stage (VI) where the second pusher - 1'- becomes positioned facing the first injection side moulding cavity -6A- (cf. figures 7E, 15), and the rotary insert -5a- is retracted into the ejection side mould part -5-. Thereafter, the lateral opening mechanism closes the lateral mould plates -5A'-, - 5B'- and -5C'- (cf. figures 7F, 11).

In stage (VII), the mould closes and adopts the position corresponding in figure 7G in which simultaneously the second pusher -1'- is then overmoulded in stage (VIII) with a second shock absorber -2'- in the mould portion comprised of moulding cavities -5A, 6A-, a third pusher -1"- is moulded in the mould portion comprised of moulding cavities -5B, 6B- and a second thread setting -3'- is moulded in the mould portion comprised of moulding cavities -5C, 6C- (cf. figure 7H). As readily apparent, stage (VIII) is analogous to stage (I) so that after stage (VIII) subsequent operations being analogous to stages (II)-(VII) can be performed to manufacture a plurality of further rack guides.

## Claims

1. A rack guide for a steering mechanism of an automobile comprising a cylindrical pusher (1) connected to a thread setting (3) by means of a compressible element as a shock absorber (2); and a ring-shaped sealing element (2g) radially protruding from an outer perimeter of the pusher element, **characterized in that**
the pusher (1) comprises a hollow first cylindrical portion (1a), a hollow second cylindrical portion (1b) and an annular recessed portion (1c) between said cylindrical portions (1a, 1b), an inner cavity (1e), a cover portion (1 h) comprising a transversal arched depression (1 i) shaped such that its surface is complementary to the shape of a circumferential portion of a rack shaft, and an open base surrounded by a free rim (1g) of the first cylindrical hollow portion (1a);
the first cylindrical portion (1 a) and the annular recessed portion (1c) comprise axial slits (1d) extending from the free rim (1g) to the second cylindrical portion (1b);
a tube-shaped projection (1j) extends from a centre portion of the arched depression (1i) into the inner cavity (1e);
the shock absorber (2) comprises a cylindrical body (2a) comprising a free end portion (2b) and a thereto axially-opposed flanged end portion (2c) with a peripheral skirt (2d) extending therefrom towards the free end portion (2b) such that there is an annular space (2e) between the skirt (2d) and the outer surface of the cylindrical body (2a), a ring (2g) surrounding the peripheral skirt (2d) at a distance from the peripheral skirt (2d) and a rounded outer surface, and a first axial hollow portion (2h) extending from the centre of the flanged portion (2c) into the cylindrical body (2a);
the cylindrical body (2a), the peripheral skirt (2d) and the ring (2g) are connected to each other by radial ribs (2f, 2f) located in positions being complementary to the axial slits (1d) in the first cylindrical portion (1a) and the annular recessed portion (1c) of the pusher (1);
the ring (2g) is connected to portions (2f) of the radial ribs (2f) being nearest to said flanged end portion (2c);
the first axial hollow (2h) is positioned and dimensioned to retain the tube-shaped projection (1j) of the pusher (1);
the pusher (1) is overmoulded with the shock absorber (2) by injection such that the pusher (1) and the shock absorber (2) are comprised in a subassembly (4) in which the flanged end portion (2c) and the peripheral skirt (2d) of the shock absorber (2) fit within the inner cavity (1e) of the pusher (1);
the flanged end portion (2c) of the shock absorber (2) contacts the cover portion (1h) of the pusher (1) and the radial ribs (2f) of the shock absorber (2) are located respectively within the annular recessed portion (1c) and the axial slits (1d) of the pusher (1), and the rounded outer surface of the ring (2g) protrudes from the radial surface of the pusher (1) and whilst the end portions (2f) of the radial ribs (2f) radially flush with said radial surface of the skirt (2d);
the thread setting (3) comprises a closed base (3a) having a flat surface and an open base (3b), a threaded outer surface (3c), and a fastening element (3h) emerging from the closed base (3a) dimensioned and positioned to fit by pressure within a second axial hollow portion (2j) in the cylindrical body (2a) of the shock absorber (2) such that said closed base (3a) of the thread setting abuts against the open base (2b) of the shock absorber (2).

2. A rack guide according to claim 1, **characterized in that** the tube-shaped projection (1i) has an axial inner passage (1k) and **in that** within the first axial hollow portion (2h) there is an axial protrusion (2i) that extends from the bottom of the first axial hollow portion (2h) towards the flanged portion (2c) such that there is an axial annular chamber around the axial protrusion (2i), and **in that** the tube shaped projection (1j) of the pusher (1) fits within said annular chamber and said axial protrusion (2i) fits within the axial inner passage (1 k) of the projection (1j).

3. A rack guide according to claim 1 or 2, **characterized in that** the inner cavity (1e) in the pusher (1) has a slightly frustoconical shape and comprises an inner annular stepped portion (1f), and **in that** the skirt (2d) has a complementarily shaped radial surface comprising a radial step (21) dimensioned and positioned complementarily to the annular stepped portion (1f) in the inner cavity (1e) of the pusher (1), such that the skirt (2d) has an outer diameter that increases towards the setting thread (3).

4. A rack guide according to claim 1, 2 or 3, **characterized in that** it comprises stubs (2k) axially emerging from diametrically opposed sections of the flange end portion (2c) of the shock absorber (2), the stubs (2k) fitting in peripheral notches (1l) provided in opposed side portions of the inner surface of the cover portion (1 h) of the pusher (1).

5. A rack guide according to any of the preceding claims, **characterized in that** the fastening element (3h) comprises a plurality of axially protruding resiliently flexible wings (3h') having hook-shaped heads portions.

6. A rack guide according to any of the preceding claims, **characterized in that** the shock absorber (2) is made from a flexibly resilient injectable material.

7. A rack guide according to claim 6, **characterized in that** the flexibly resilient injectable material is selected from silicones, thermoplastic polyurethanes, thermoplastic vulcanized and combinations thereof.

8. A method for making rack guides having the structure of the rack guide as defined in any of claims 1-7 comprising injection-moulding the pusher (1) in a mould comprising an ejection side (5) and an injection side (6), the shock absorber (2) and the thread setting (3) and assembling the pusher (1), the shock absorber (2) and the thread setting (3), **characterized in that** it comprises
a first step in which the mould is closed such that a first ejection side moulding cavity (5A) closes against a first injection side moulding cavity (6A), a second ejection side moulding cavity (5B) closes against a second injection side moulding cavity (6B), and a third ejection side moulding cavity (5C) closes against a third injection side moulding cavity (6C),
a second step in which, in the closed mould, simultaneously a pusher (1) held in a first ejection side moulding cavity (5A) is overmoulded in said first moulding cavities (5A, 6A) such that a subassembly (4) comprising the pusher (1) and a shock absorber (2) is formed, a further pusher (1') is moulded in said second cavities (5B, 6B), and a thread setting (3) is moulded in the third moulding cavities (5C, 6C);
a third step in which the mould is opened such that the subassembly (4), the further pusher (1') and the thread setting (3) remain held respectively in said first, second and third ejection side moulding cavities (5A, 5B, 5C);
a fourth step in which the thread setting (3) is extracted from the third ejection side moulding cavity (5C) and then assembled to the shock absorber (2) of said subassembly (4) so that a finished rack guide is produced;
a fifth step in which the finished rack guide is extracted from the open mould;
a sixth step in which a rotary insert (5a) carrying the further pusher (1') is pushed towards the injection side (6) and rotated such that said further pusher (1') faces the first injection side moulding cavity (6A);
a seventh step in which the rotary insert (5a) is retracted into the ejection side (5);
an eighth step in which the mould is again closed and, simultaneously the further pusher (1') is overmoulded in said first moulding cavities (5A, 6A) such that a further subassembly comprising the pusher (1') and shock absorber (2') is formed, a still further pusher (1") is moulded in said second moulding cavities (5B, 6B), and a further thread setting (3') is moulded in said third moulding cavities (5C, 6C); carrying out sequences of steps being analogous to the third, fourth, fifth, sixth, seventh and eight steps as many times as required to make a desired amount of rack guides.

## Patentansprüche

1. Zahnstangenführung für einen Lenkmechanismus eines Kraftfahrzeugs, umfassend einen zylindrischen Schieber (1), der mit einem Gewindeaufbau (3) mit Hilfe eines komprimierbaren Elementes als Stoßdämpfer (2) verbunden ist; und ein ringförmiges Dichtungselement (2g), das von einem Rand des Schieberelementes hervorragt, **dadurch gekennzeichnet, dass**
der Schieber (1) enthält: einen ersten hohlen Zylinderabschnitt (1 a), einen zweiten hohlen Zylinderabschnitt (1 b) und einen ringförmigen ausgenommenen Abschnitt (1 c) zwischen den zylindrischen Abschnitten (1 a, 1b), einen Innenhohlraum (1 e), einen Abdeckabschnitt (1 h), der eine transversale bogenförmige Vertiefung (1 i) aufweist, die derart geformt ist, dass ihre Oberfläche komplementär zu der Form eines Umfangsabschnittes einer Zahnwelle ist, und eine offene Basis, die von einem freien Kranz (1 g) des ersten hohlen Zylinderabschnittes (1 a) umgeben ist;
der erste Zylinderabschnitt (1 a) und der ringförmige ausgenommene Abschnitt (1 c) axiale Schlitze (1 d) aufweisen, die sich von dem freien Kranz (1 g) zu dem zweiten Zylinderabschnitt (1 b) erstrecken;
sich ein röhrenförmiger Vorsprung (1j) von einem zentralen Abschnitt der bogenförmigen Vertiefung (1i) in den Innenhohlraum (1 e) erstreckt;
der Stoßdämpfer (2) umfasst: einen Zylinderkörper (2a), der einen freien Endabschnitt (2b) und einen dazu axial gegenüberliegenden flanschförmigen Endabschnitt (2c) mit einer Umfangsschürze (2d) aufweist, die sich von diesem zu dem freien Endabschnitt (2b) derart erstreckt, dass es einen ringförmigen Zwischenraum (2e) zwischen der Schürze (2d) und der Außenfläche des Zylinderkörpers (2a) gibt, einen Ring (2g), der die Umfangsschürze (2d) in einem Abstand von der Umfangsschürze (2d) und einer abgerundeten Außenfläche umgibt, und einen ersten axialen hohlen Abschnitt (2h), der sich von dem Zentrum des flanschförmigen Abschnittes (2c) in den Zylinderkörper (2a) erstreckt;
der zylindrische Körper (2a), die Umfangsschürze (2d) und der Ring (2g) miteinander durch radiale Stege (2f, 2f') verbunden sind, die sich an Positionen befinden, die komplementär zu den axialen Schlitzen (1 d) in dem ersten zylindrischen Abschnitt (1 a) und dem ringförmigen ausgenommenen Abschnitt (1c) des Schiebers (1) sind;
der Ring (2g) mit Abschnitten (2f') der radialen Stege (2f) verbunden ist, die dem flanschförmigen Endabschnitt (2c) nächstgelegen sind;
der erste axiale hohle Abschnitt (2h) derart positioniert und bemessen ist, dass er den röhrenförmigen Vorsprung (1j) des Schiebers (1) hält;
der Schieber (1) mit dem Stoßdämpfer (2) durch Spritzgießen derart vergossen ist, dass der Schieber (1) und der Stoßdämpfer (2) in einer Teilanordnung (4) enthalten sind, in der der flanschförmige Endabschnitt (2c) und die Umfangsschürze (2d) des Stoßdämpfers (2) in den Innenhohlraum (1 e) des Schiebers (1) passen;
der flanschförmige Endabschnitt (2c) des Stoßdämpfers (2) den Abdeckabschnitt (1 h) des Schiebers (1) berührt und die radialen Stege (2f) des Stoßdämpfers (2) jeweils innerhalb des ringförmigen ausgenommenen Abschnittes (1c) und der axialen Schlitze (1d) des Schiebers (1) angeordnet sind und die abgerundete Außenfläche des Rings (2g) von der radialen Oberfläche des Schiebers (1) hervorragt, während die Endabschnitte (2f) der radialen Stege (2f) mit der radialen Oberfläche der Schürze (2d) bündig sind; und
der Gewindeaufbau (3) umfasst: eine geschlossene Basis (3a), die eine flache Oberfläche und eine offene Basis (3b) hat, eine Gewindeaußenfläche (3c) und ein Befestigungselement (3h), das von der geschlossenen Basis (3a) hervorragt und derart bemessen und angeordnet ist, das es durch Druck in einen zweiten axialen hohlen Abschnitt (2j) in dem zylindrischen Körper (2a) des Stoßdämpfers (2) passt, so dass die geschlossene Basis (3a) des Gewindeaufbaus mit der offenen Basis (2b) des Stoßdämpfers (2) in Anlage ist.

2. Zahnstangenführung nach Anspruch 1, **dadurch gekennzeichnet, dass** der röhrenförmige Vorsprung (1j) einen axialen Innendurchgang (1k) hat und dass sich innerhalb des ersten axialen hohlen Abschnittes (2h) ein axialer Vorsprung (2i) befindet, der von der Unterseite des ersten axialen hohlen Abschnittes (2h) zu dem flanschförmigen Abschnitt (2c) hervorragt, so dass es eine axiale ringförmige Kammer um den axialen Vorsprung (2i) gibt, und dass der röhrenförmige Vorsprung (1j) des Schiebers (1) in die ringförmige Kammer passt und der axiale Vorsprung (2i) in den axialen Innendurchgang (1 k) des Vorsprungs (1j) passt.

3. Zahnstangenführung nach Anspruch 1 oder 2, **dadurch gekennzeichnet, dass** der Innenhohlraum (1e) in dem Schieber (1) eine leicht kegelstumpfartige Form hat und einen inneren, ringförmigen gestuften Abschnitt (1f) hat, und dass die Schürze (2d) eine komplementär geformte radiale Oberfläche hat, die eine radiale Stufe (2l) aufweist, die komplementär zu dem ringförmigen gestuften Abschnitt (1f) in dem Innenhohlraum (1 e) des Schiebers (1) derart bemessen und positioniert ist, dass die Schürze (2d) einen Außendurchmesser hat, der hin zu dem Gewindeaufbau (3) zunimmt.

4. Zahnstangenführung nach Anspruch 1, 2 oder 3, **dadurch gekennzeichnet, dass** sie Nasen (2k) enthält, die axial von diametral gegenüberliegenden Abschnitten des flanschförmigen Endabschnittes (2c) des Stoßdämpfers (2) hervorragen, wobei die Nasen (2k) in Umfangskerben (1l) passen, die an gegenüberliegenden Seitenabschnitten der Innenfläche des Abdeckabschnittes (1 h) des Schiebers vorgesehen sind.

5. Zahnstangenführung nach einem der vorhergehenden Ansprüche, **dadurch gekennzeichnet, dass** das Befestigungselement (3h) eine Vielzahl von axial hervorragenden, elastisch federnden Flügeln (3h') umfasst, die hakenförmige Kopfabschnitte haben.

6. Zahnstangenführung nach einem der vorhergehenden Ansprüche, **dadurch gekennzeichnet, dass** der Stoßdämpfer (2) aus einem flexibel federnden, einspritzbaren Material besteht.

7. Zahnstangenführung nach Anspruch 6, **dadurch gekennzeichnet, dass** das flexibel federnde, einspritzbare Material aus Silikonen, thermoplastischen Polyuretanen, thermoplastischen vulkanisierten Materialien und Kombinationen daraus gewählt ist.

8. Verfahren zum Herstellen von Zahnstangenführungen, die den Aufbau der Zahnstangenführung nach einem der Ansprüche 1 bis 7 haben, umfassend das Spritzgießen des Schiebers (1) in einer Form, die eine Austrittsseite (5) und eine Einspritzseite (6), den Stoßdämpfer (2) sowie den Gewindeaufbau (3) enthält, und das Zusammensetzen des Schiebers (1), des Stoßdämpfers (2) und des Gewindeaufbaus (3), **dadurch gekennzeichnet, dass** es umfasst:
einen ersten Schritt, bei dem die Form geschlossen ist, so dass ein erster austrittseitiger Formhohlraum (5A) einen ersten einspritzseitigen Formhohlraum (6A) abschließt, ein zweiter austrittsseitiger Formhohlraum (5B) einen zweiten einspritzseitigen Formhohlraum (6B) abschließt und ein dritter austrittsseitiger Formhohlraum (5C) einen dritten einspritzseitigen Formhohlraum (6C) abschließt,
einen zweiten Schritt, bei dem in der geschlossenen Form gleichzeitig ein Schieber (1), der in einem ersten austrittsseitigen Formhohlraum (5A) gehalten wird, in den ersten Formhohlräumen (5A, 6A) derart vergossen wird, dass eine Teilanordnung (4), die den Schieber (1) und einen Stoßdämpfer (2) umfasst, ausgebildet wird, ein weiterer Schieber (1') in den zweiten Hohlräumen (5B, 6B) gegossen wird und ein Gewindeaufbau (3) in den dritten Formhohlräumen (5C, 6C) gegossen wird;
einen dritten Schritt, bei dem die Form geöffnet wird, so dass die Teilanordnung (4), der weitere Schieber (1') und der Gewindeaufbau (3) jeweils in dem ersten, dem zweiten und dem dritten austrittsseitigen Formhohlraum (5A, 5B, 5C) gehalten bleiben;
einen vierten Schritt, bei dem der Gewindeaufbau (3) aus dem dritten austrittsseitigen Formhohlraum (5C) gezogen und dann mit dem Stoßdämpfer (2) der Teilanordnung (4) zusammengesetzt wird, so dass die fertige Zahnstangenführung hergestellt wird;
einen fünften Schritt bei dem die fertige Zahnstangenführung aus der offenen Form gezogen wird;
einen sechsten Schritt, bei dem ein Rotationseinsatz (5a), der den weiteren Schieber (1') trägt, hin zur Einspritzseite (6) geschoben und derart gedreht wird, dass der weitere Schieber (1') dem ersten einspritzseitigen Formhohlraum (6A) zugewandt ist;
einen siebten Schritt, bei dem der Rotationseinsatz (5a) in die Austrittsseite (5) zurückgezogen wird; und
einen achten Schritt, bei dem die Form wieder geschlossen wird und gleichzeitig der weitere Schieber (1') in den ersten Formhohlräumen (5A, 6A) derart vergossen wird, das eine weitere Teilanordnung, die den Schieber (1') und den Stoßdämpfer (2') umfasst, ausgebildet wird, ein weiterer Schieber (1") in den zweiten Formhohlräumen (5B, 6B) gegossen wird und ein weiterer Gewindeaufbau (3') in den dritten Formhohlräumen (5C, 6C) gegossen wird; wobei die Abfolgen von Schritten, die analog zu dem dritten, vierten, fünften, sechsten, siebten und achten Schritt sind, so oft ausgeführt werden, wie dies erforderlich ist, um die gewünschte Menge von Zahnstangenführungen herzustellen.

## Revendications

1. Guide de crémaillère d'un mécanisme de direction d'un véhicule automobile comportant un poussoir cylindrique (1) relié à un organe de réglage fileté (3) par l'intermédiaire d'un élément compressible comme absorbeur de choc (2) et un élément d'étanchéité de forme annulaire (2g), venant radialement en saillie par rapport au périmètre extérieur du poussoir,
guide **caractérisé en ce que**
le poussoir (1) comporte une première partie cylindrique creuse (1a), une seconde partie cylindrique creuse (1b) et une cavité annulaire (1c) entre les deux parties cylindriques (1a, 1b), une cavité intérieure (1e), une partie de couverture (1h) avec une cavité (1i) en arc, transversale, dont la surface est complémentaire à la forme de la partie périphérique de l'axe de la crémaillère et une base ouverte entourée par un bord libre (1g) de la première partie cylindrique creuse (1a),
- la première cylindrique (1a) et la partie annulaire en creux (1c) comportent des fentes axiales (1d) partant du bord libre (1g) de la seconde partie cylindrique (1b),
- une partie en saillie (1j) de forme tubulaire, partant de la partie centrale de la cavité en arc (1i) venant dans la cavité intérieure (1e),
- l'absorbeur de choc (2) a un corps cylindrique (2a) avec une extrémité libre (2b) et de façon axialement opposée, une extrémité à bride (2c) avec une jupe périphérique (2d) s'étendant de celle-ci en direction de l'extrémité libre (2b) de façon à former un espace annulaire (2e) entre la jupe (2d) et la surface extérieure du corps cylindrique (2a), un anneau (2g) entourant la jupe périphérique (2d) à une certaine distance de la jupe périphérique (2d) et une surface extérieure arrondie ainsi qu'une première partie axiale creuse (2h) partant du centre de la partie en forme de bride (2c) dans le corps cylindrique (2a),
- le corps cylindrique (2a), la jupe périphérique (2d) et l'anneau (2g) étant reliés les uns aux autres par des nervures radiales (2f, 2f) situées dans des positions complémentaires aux fentes axiales (1d) de la première partie cylindrique (1a) et de la partie annulaire en creux (1c) du poussoir (1),
- l'anneau (2g) étant relié à la partie (2f) des nervures radiales (2f) la plus proche de la partie d'extrémité en forme de bride (2c),
- le premier creux axial (2h) étant positionné et dimensionné pour retenir la partie en saillie de forme tubulaire (1j) du poussoir (1),
le poussoir (1) étant surmoulé par l'absorbeur de choc (2) par injection de façon que le poussoir (1) et l'absorbeur de choc (2) fassent partie d'un sous-ensemble (4) dans lequel l'extrémité à bride (2c) et la jupe périphérique (2d) de l'absorbeur de choc (2) s'adaptent dans la cavité intérieure (1e) du poussoir (1),
- l'extrémité en forme de bride (2c) de l'absorbeur de choc (2) touchant la partie de couverture (1h) du poussoir (1) et les nervures radiales (2f) de l'absorbeur de choc (2) sont situées respectivement dans la partie annulaire en creux (1c) et les fentes axiales (1d) du poussoir (1) et la surface extérieure arrondie de l'anneau (2g) viennent en saillie de la surface radiale du poussoir (1) alors que les parties d'extrémité (2f) des nervures radiales (2f) sont radialement à niveau avec la surface radiale de la jupe (2d),
l'organe de réglage fileté (3) comporte une base fermée (3a) ayant une surface plate et une base ouverte (3b), une surface extérieure filetée (3c) et un élément de fixation (3h) issu de la base fermée (3a), dimensionné et positionné par le jeu par pression avec une seconde partie creuse axiale (2j) dans le corps cylindrique (2a) de l'absorbeur de choc (2) de façon que la base fermée (3a) de l'organe de réglage fileté butte contre la base ouverte (2b) de l'absorbeur de choc (2).

2. Guide de crémaillère selon la revendication 1,
**caractérisé en ce que**
- la partie en saillie (1j) de forme tubulaire a un passage axial intérieur (1k) et la première partie axiale creuse (2h), a une saillie axiale (2i) partant du fond de la première partie axiale creuse (2h) vers la partie en forme de bride (2c) de façon à avoir une chambre annulaire autour de la saillie axiale (2i), et
- la saillie de forme tubulaire (1j) du poussoir (1) se loge dans la chambre annulaire et la saillie axiale (2i) se loge dans le passage axial intérieur (1k) de la partie en saillie (1j).

3. Guide de crémaillère selon la revendication 1 ou 2,
**caractérisé en ce que**
la cavité intérieure (1e) du poussoir (1) a une forme légèrement tronconique et comporte une partie intérieure annulaire étagée (1f) et la jupe (2d) a une surface radiale de forme complémentaire avec un épaulement radial (21) dimensionné et positionné de façon complémentaire à la partie étagée annulaire (1f) de la cavité intérieure (1e) du poussoir (1), la jupe (2d) ayant un diamètre extérieur qui augmente vers l'organe de réglage fileté (3).

4. Guide de crémaillère selon les revendications 1, 2 ou 3,
**caractérisé par**
des bossages (2k) dépassant axialement des sections diamétralement opposées de la partie d'extrémité en forme de bride (2c) de l'absorbeur de choc (2), les bossages (2k) se logeant dans des encoches périphériques (11) des parties de côté opposées de la surface intérieure de la partie de couverture (1h) du poussoir (1).

5. Guide de crémaillère selon l'une quelconque des revendications précédentes,
**caractérisé en ce que**
l'élément de fixation (3h) comporte un ensemble d'ailes souples élastiques (3h') venant axialement en saillie et ayant des parties de tête en forme de crochet.

6. Guide de crémaillère l'une quelconque des revendications précédentes,
**caractérisé en ce que**
l'absorbeur de choc (2) est réalisé en une matière élastique souple susceptible d'être injectée.

7. Guide de crémaillère selon la revendication 6,
**caractérisé en ce que**
la matière élastique souple susceptible d'être injectée est choisie parmi les silicones, les polyuréthanes thermoplastiques, les thermoplastiques vulcanisés et leurs combinaisons.

8. Procédé de réalisation de guide de crémaillère ayant la structure du guide de crémaillère selon l'une quelconque des revendications 1 à 7 consistant à :
- mouler par injection le poussoir (1) dans un moule comportant un côté d'éjection (5) et un côté d'injection (6), l'absorbeur de choc (2) et l'organe fileté de réglage (3), et
- assembler le poussoir (1), l'absorbeur de choc (2) et l'organe de réglage fileté (3),
procédé **caractérisé par**
- une première étape consistant à fermer le moule pour que le premier côté d'éjection de la cavité de moulage (5A) se ferme contre une première cavité de moulage côté injection (6A), une seconde cavité de moulage côté éjection (5B) se ferme contre une seconde cavité de moulage côté injection (6B) et une troisième cavité de moulage côté éjection (5C) se ferme contre une troisième cavité de moulage côté injection (6C),
- une seconde étape dans laquelle le moule étant fermé, on effectue le surmoulage simultané d'un poussoir (1) tenu dans une première cavité de moulage côté éjection (5A) dans les premières cavités de moulage (5A, 6A) de façon à réaliser un sous-ensemble (4) formé du poussoir (1) et de l'absorbeur de choc (2), on moule un autre poussoir (1') dans les secondes cavités (5B, 6B) et on moule un organe de réglage fileté (3) dans les troisièmes cavités de moulage (5C, 6C),
- une troisième étape dans laquelle on ouvre le moule de façon que le sous-ensemble (4), l'autre poussoir (1') et l'organe de réglage fileté (3) restent tenus respectivement dans la première, seconde et troisième cavité de moulage côté éjection (5A, 5B, 5C),
- une quatrième étape au cours de laquelle on extrait l'organe de réglage fileté (3) de la troisième cavité de moulage côté éjection (5C) et ensuite on l'assemble à l'absorbeur de choc (2) du sous-ensemble (4) de façon à obtenir le guide de crémaillère, terminé,
- une cinquième étape au cours de laquelle on extrait le guide de crémaillère terminé du moule ouvert,
- une sixième étape dans laquelle l'insert rotatif (5A) portant l'autre poussoir (1') est poussé vers le côté d'injection (6) et est tourné pour que l'autre poussoir (1') soit tourné vers la première cavité de moulage côté injection (6A),
- une septième étape dans laquelle l'insert rotatif (5A) est rétracté dans le côté d'éjection (5),
- une huitième étape dans laquelle le moule est refermé et simultanément l'autre poussoir (1') est surmoulé dans les premières cavités de moulage (5A, 6A) de façon à former un autre sous-ensemble composé du poussoir (1') et de l'absorbeur de choc (2'), et on moule un autre poussoir (1") dans les secondes cavités de moulage (5B, 6B) et on moule un autre organe de réglage fileté (3') dans les troisièmes cavités de moulage (5C, 6C),
- on exécute les séquences d'étapes de façon analogue aux troisième, quatrième, cinquième, sixième, septième et huitième étapes autant de fois qu'il est nécessaire pour réaliser le nombre voulu de guides de crémaillère.
